Europäisches Patentamt

(19) European Patent Office

Office européen des brevets

(11) Numéro de publication: **0 025 371**
**B1**

# (12) FASCICULE DE BREVET EUROPEEN

(45) Date de publication du fascicule du brevet:
**25.05.83**

(21) Numéro de dépôt: **80401120.3**

(22) Date de dépôt: **29.07.80**

(51) Int. Cl.³: **F 03 B 3/02**, F 03 B 13/00

(54) **Turbine hydraulique à quatre aubes, à échappement axial, ayant un distributeur sans aubage et avec injecteurs, plus particulièrement destinée à l'outillage pour travaux sous-marins.**

(30) Priorité: **03.08.79 FR 7919936**

(43) Date de publication de la demande:
**18.03.81 Bulletin 81/11**

(45) Mention de la délivrance du brevet:
**25.05.83 Bulletin 83/21**

(84) Etats contractants désignés:
**BE DE GB IT NL SE**

(56) Documents cités:
**DE-C-466 300**
**GB-A-962 345**
**US-A-1 650 475**

(73) Titulaire: **Lesna (société civile), Villa Andriette,
F-20222 Erbalunga (FR)**

(72) Inventeur: **Flandin-Blety, Georges, 8, Impasse des
Muges, F-13008 Marseille (FR)**

(74) Mandataire: **Marquer, Francis, 35, Avenue Victor Hugo
Résidence Chamfleury, F-78180 Voisins le Bretonneux
(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

Turbine hydraulique à quatre aubes, à échappement axial, ayant un distributeur
sans aubages et avec injecteurs, plus particulièrement destinée à l'outillage pour travaux sous-marins

Dans le brevet français n° 7 635 439 publié sous le n° 2 370 874 déposé le 16 Novembre 1976 par Georges Flandin Blety, on a décrit une turbine tournant à des vitesses de l'ordre de 3000 tours par minute par exemple et apte à entraîner des outils, tels que brosses ou autres, destinés notamment à des travaux sous-marins.

Cette turbine peut être actionnée par une motopompe fournissant de l'eau sous une pression de quelques bars avec un débit de l'ordre d'une à plusieurs dizaines de m³ à l'heure et permet de réaliser des appareils portables.

Suivant ledit brevet, la turbine comporte un distributeur se présentant sous la forme d'un canal sans aubages qui communique, avec les aubes d'un rotor à quatre aubes, au moyen d'injecteurs constitués par des fentes formées entre des portions de couronne circulaire du stator, en nombre double de celui des aubes, l'eau s'échappant axialement au centre de la chambre rotorique.

Les travaux ultérieurs de la Demanderesse lui ont permis de découvrir qu'une telle turbine ne fonctionne correctement et avec un rendement satisfaisant que si un oertain nombre de conditions de forme et de dimensions sont respectées.

En conséquence, la turbine suivant l'invention est principalement caractérisée en ce que les aubes ont un profil en arc de cercle, que les portions de la couronne statorique qui définissent les injecteurs ont chacune une face terminale plane sensiblement inclinée à 45° sur le rayon correspondant de la portion de couronne considérée et, pour un premier injecteur, formant un angle sensiblement égal à 135° avec le plan tangent à la surface extérieure de l'aube correspondante, lorsque celle-ci occupe une position dans laquelle une aube voisine est sur le point de venir coopérer avec l'injecteur considéré.

Suivant une particularité additionelle de l'invention, dans ladite position d'une aube, elle coopère avec un second injecteur dont la face terminale plane fait un angle sensiblement égal à 120° avec le plan tangent à la surface extérieure de ladite aube et la différence d'inclinaison des deux jets consécutifs agissant sur la même aube est constamment sensiblement égale à 15°.

Une particularité additionelle de l'invention est que le rapport entre le rayon extérieur desdits arcs de cercle et le rayon intérieur de ladite couronne statorique est sensiblement égal à 3/4.

D'autres particularités, ainsi que les avantages de l'invention, apparaîtront clairement à la lumière de la description ci-après.

Au dessin annexé:

La figure 1 est une vue en élévation et en coupe, à échelle réduite, d'une turbine conforme à un mode d'exécution préféré de l'invention;

La figure 2 est une vue en coupe par un plan perpendiculaire à l'axe du rotor, le rotor étant enlevé;

La figure 3 est une vue schématique du rotor, montrant les aubes; et

La figure 4 est un schéma destiné à montrer la disposition des aubes et de la couronne d'injection.

Le stator de la turbine représentée au dessin est composé d'un corps principal 1 fermé par un flasque 2 fixé au corps 1 à sa périphérie au moyen de vis 20.

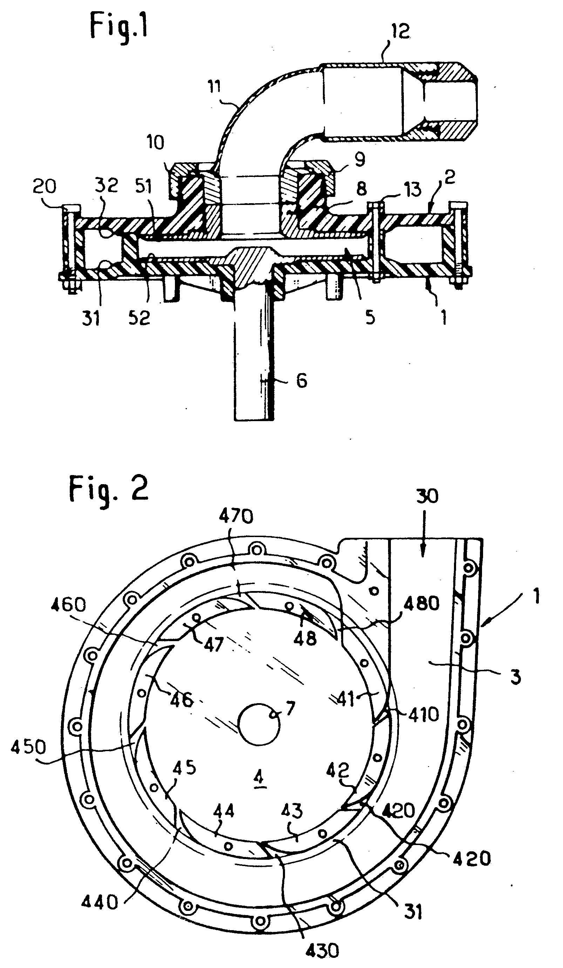

Comme on le voit à la figure 2, le corps 1 forme un canal 3 fermé par le flasque 2 et muni en 30 d'un orifice d'admission de l'eau et une chambre cylindrique plate 4 qui reçoit le rotor 5, dont l'arbre 6 traverse axialement un orifice circulaire 7 ménagé au fond de la chambre 4 et tourillonne dans cet orifice. La face opposée du rotor comporte un axe creux 8 qui tourillonne dans un palier 9 formé par la partie centrale du flasque 2 et fileté extérieurement. Le palier 9 est lui-même coiffé d'une bague de retenue 10 destinée au raccordement d'un conduit coudé 11 orientable dans toutes les directions et muni d'une tuyère 12.

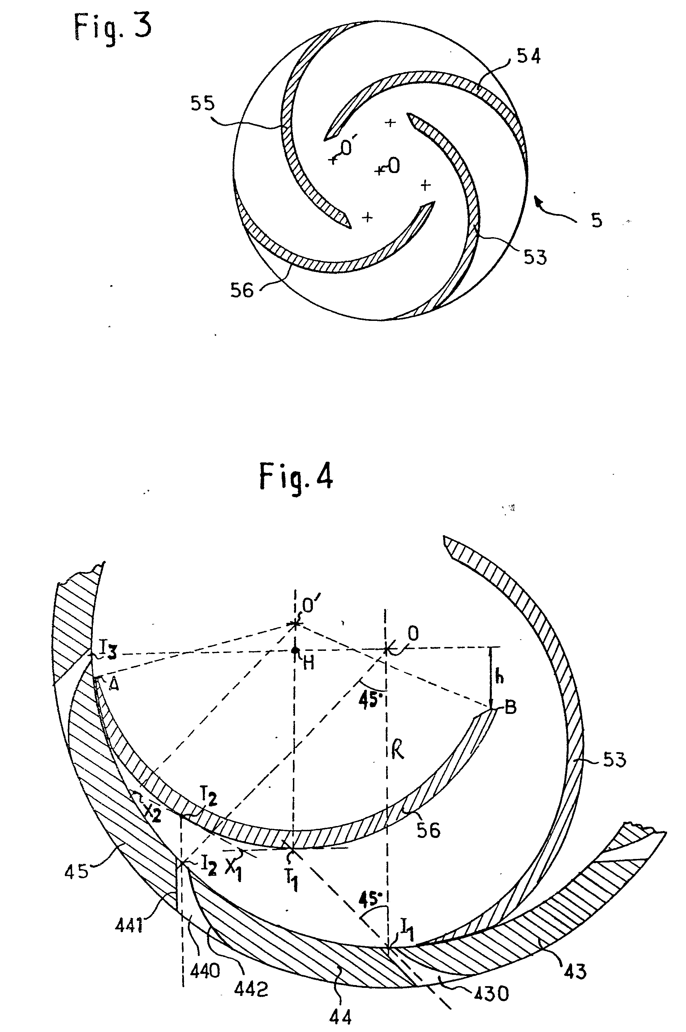

La paroi extérieure circulaire de la chambre 4 est constituée, dans le mode d'exécution préféré décrit, de huit portions 41 à 48, solidaires du corps 1. Le flasque 2 est fixé sur le corps 1, au moyen de vis 13 et 20. Ces portions, qui couvrent chacune un angle égal à 45°, sont séparées entre elles par des fentes 410-420-430-440-450-460-470 et 480, fermées en haut par le flasque 2 et constituant des injecteurs de l'eau depuis le canal 3 vers la chambre 4. Chaque injecteur est délimité par une surface plane, telle que 441 de la portion 45 (figure 4) inclinée à 45° sur le rayon rotorique correspondant et par une surface cylindrique 442 qui se raccorde avec les surfaces cylindriques intérieure et extérieure d'une des portions 44.

Le profil développé du canal 3 dans un plan perpendiculaire à l'axe du rotor a la forme générale d'un trapèze isocèle dont la grande base correspond à l'orifice 30 et dont la petite base est au niveau de l'injecteur 480. Les côtés allongés de ce trapèze font un angle d'environ 87° avec sa grande base. Dans sa partie qui communique avec la chambre centrale, le canal 3 a une section droite (figure 1) comportant deux chanfreins 31—32 inclinés à 30°.

Le rotor (figures 1, 3 et 4) est formé de deux disques 51, 52 ayant un diamètre sensiblement égal à celui de la chambre 4 (un jeu de 1% entre le diamètre du rotor et celui de la chambre statorique est avantageusement prévu) et entre lesquels sont prévues quatre aubes 53 à 56, le disque inférieur 52 n'étant muni d'aucun orifice, tandis que le disque supérieur 51 est muni de l'orifice de base de l'arbre creux 8; autrement dit, l'eau qui pénètre par un injecteur $I_1$ (figure 4) travaille dans une chambre limitée, côté arrivée, par deux portions cylindriques de paroi de la chambre 4 du stator et par deux aubes et, côté sortie, débouchant entre les extrémités des deux aubes, au voisinage de l'orifice de l'arbre 8, par lequel elle s'échappe.

La figure 4 montre que, le rotor étant positionné comme l'illustre cette figure, pour un rayon R du rotor de centre O, de 59,5 mm, on déterminera le centre O' de l'aube 56, de 41,5 mm de rayon intérieur et 45 mm de rayon extérieur, en traçant un triangle rectangle OHO' avec OH = 19 mm et HO' = 5 mm, ce qui correspond à OO' = 19,65 mm Plus généralement, les quatre centres des arcs de cercle qui constituent les aubes seront de préférence situés sur une circonférence de centre O et de rayon 0,33 R. Ces quatre centres sont évidemment situés sur deux axes orthogonaux. On a considéré, à la figure 4, une position du rotor où une extrémité A de l'aube 56 vient affleurer le bord inférieur de l'orifice de sortie d'un injecteur (plus précisément, dans laquelle l'arc de cercle intérieur de l'aube se raccorde avec la paroi statorique au point où celle-ci est coupée par la droite $OHI_3$. L'autre extrémité B de l'aube 56 se trouve alors sur un rayon O'B, tel que l'angle au centre $\overline{BO'A}$ soit sensiblement de 140° et la distance L entre l'extrémité B et la droite $OHI_3$ soit d'environ 12 mm. De préférence, l'extrémité correspondant à A est une portion de surface circulaire parallèle à la surface statorique en regard, le jeu entre ces deux surfaces étant d'environ 1% du diamètre du rotor. Le rayon de la surface cylindrique (telle que 442) de chaque injecteur est avantageusement de 25 mm.

Suivant une particularité essentielle du dispositif décrit, dans la position rotorique représentée à la figure 4 (où la paroi intérieure de l'extrémité extérieure de chaque aube se raccorde à la surface intérieure de la chambre au niveau d'un injecteur sur deux), les directions $I_1T_1$ et $I_2T_2$, parallèles aux parois planes des injecteurs (c'est-à-dire, inclinées à 45° sur $OI_1$ et $OI_2$, $I_1$ et $I_2$ étant les centres des fenêtres rectangulaires, de 10 mm de long et 2 mm de large dans l'exemple décrit, par lesquelles les injecteurs débouchent dans la chambre (4)), sont respectivement inclinées à 135° et 120° sur les tangentes à l'aube en $T_1$ et $T_2$ (il s'agit de demi-tangentes T, X et $T_2X_2$ dirigées de la droite vers la gauche).

Pour faire fonctionner la turbine qui vient d'être décrite, on injecte de l'eau sous pression (de 0,3 à 10 bars et de préférence de l'ordre de 3 à 5 bars par exemple) par l'orifice 30 (auquel est raccordée une motopompe). L'eau pénètre dans chaque chambre de travail par deux injecteurs, respectivement dans les directions $I_1T_1$ et $I_2T_2$. Les forces correspondantes d'impact sur chaque aube ont, dans la position du rotor représentée à la figure 4, des composantes tangentielles respectivement dirigées comme T, X et $T_2X_2$. Il en résulte un couple par rapport au centre o et le rotor est entraîné en rotation dans le sens des aiguilles d'une montre.

On notera que, par suite de cette rotation, l'aube 56 va immédiatement cesser de recevoir l'impact de l'eau éjectée en $I_1$, tandis qu'elle va continuer de recevoir l'impact de l'eau injectée en $I_2$ et commencer à recevoir l'impact de l'eau injectée en $I_3$, jusqu'à ce que $I_2T_2$ fasse à son tour un angle de 135° avec T, X. En même temps, l'aube 53 va commencer à recevoir le jet injecté en $I_1$, sensiblement sous un angle de 120° avec la tangente. Autrement dit, les angles de 120° et de 135° constituent sensiblement les valeurs minimale et maximale de l'angle variable que fait chacun des deux jets d'eau injectés sur chaque aube avec la tangente à l'aube. En outre, la différence d'inclinaison des jeux est constamment égale à 15°.

Les essais effectués par la Demanderesse ont montré que le rendement de la turbine décroît rapidement lorsque l'angle maximum I, T, X, s'écarte de la valeur critique de 135°. Lorsque ledit angle passe par exemple de 135° à 145°, le rendement peut diminuer de 30%, tandis qu'il diminue de 40% si l'angle passe de 135° à 125°. En dehors de ces limites, on peut considérer que la turbine n'est plus apte à fonctionner en pratique, le rotor pouvant se bloquer.

On fera observer que le jet d'eau injecté en $I_1$ dans la position de la figure 4 se divise, après l'impact sur l'aube, en une portion qui s'échappe directement et rapidement vers la sortie de la chambre et une portion qui se trouve, en quelque sorte, coincée dans la partie étroite de la chambre; elle tourbillonne sur place et risque de provoquer un ralentissement excessif du rotor si elle représente une proportion trop importante du jet, ce qui est le cas lorsque l'angle maximum dépasse sensiblement 135°. Dans le cas où, au contraire, l'angle maximum est sensiblement inférieur à 135°, d'une part la composante tangentielle de la force d'impact du jet diminue, d'autre part, la proportion du jet qui s'échappe directement vers la sortie croît, si bien que le rendement tombe très rapidement. En pratique, l'on s'en tiendra à la valeur de 135°, l'écart devant rester inférieur à 5°.

Les essais ont également montré que la valeur de l'angle minimal d'impact en $I_2$ est critique (ne devant pas s'écarter de la valeur de 120° de plus de 10° et, de préférence, de 50°). Lorsque l'angle minimum s'écarte des valeurs indiquées, on retrouve les mêmes phénomènes que lorsqu'on s'écarte de la valeur optimale de l'angle maximum.

De préférence, la différence entre les deux angles extrêmes ne doit d'ailleurs pas sensiblement s'écarter de plus d'un degré de la valeur critique de 15°.

Les valeurs angulaires mentionnées ci-dessus devront rester les mêmes si la turbine a des dimensions différentes de celles mentionnées, ou travaille à des pressions différentes.

La structure de la turbine est finalement principalement caractérisée par le nombre des aubes (qui sera toujours égal à quatre), le nombre et la disposition des injecteurs (huit injecteurs ayant une surface telle que la direction principale du jet soit sensiblement inclinée à 45° sur le rayon correspondant du stator et sensiblement positionnés à 45° les uns des autres), la forme en arc de cercle des aubes et lesdites valeurs angulaires, dont la principale est constituée par la valeur de 135° définie ci-dessus. Toutefois, d'autres caractéristiques se sont avérées importantes.

La principale de ces caractéristiques supplémentaires est le rapport entre le rayon extérieur des aubes et le rayon du rotor, rapport sensiblement égal à 3/4 dans le mode d'exécution préféré décrit. On fera observer que, de ce rapport, dépend la forme plus ou moins évasée de chacune des chambres de travail de l'eau. L'échappement optimal de l'eau est en outre lié à la valeur (140°) de l'angle $\overline{BO'A}$. Toutes les dimensions indiquées dans l'exemple décrit sont évidemment valables à une homothétie près.

Il convient ici de noter que le rapport des rayons mentionné ci-dessus détermine pratiquement la position du centre O' lorsque l'on s'est fixé le rayon du rotor et les valeurs des angles maximum et minimum $\overline{I_1T_1X_1}$ et $\overline{I_2T_2X_2}$. En effet, il s'agit alors de tracer un arc de cercle (56, figure 4) de rayon donné, qui passe par le point connu $I_3$ et coupe les demi-droites de positions connues $I_1T_1$ et $I_2T_2$ en deux points respectifs $T_1$ et $T_2$ tels que l'angle $\overline{T_1O'T_2}$ fasse 30° et que la tangente $T_1X_1$ à ce cercle soit perpendiculaire à $OI_1$.

Une autre caractéristique supplémentaire est la présence d'un jeu, de préférence de l'ordre de 1% du diamètre du rotor, entre clui-ci et la chambre statorique 4. Ce jeu permet un certain passage de l'eau entre les chambres de travail et l'on constate que le rendement décroît si on le réduit ou si on l'augmente par rapport à la valeur indiquée. Un jeu, de préférence sensiblement égal à 3% de la hauteur de la chambre statorique, est également prévu entre celle-ci et les surfaces opposées des disques 51 et 52. Ce jeu, qui n'est pas montré à la figure 1, permet l'équilibre axial du rotor et évite des coincements qui nuiraient en particulier au rendement.

Une autre caractéristique supplémentaire est la valeur, de préférence égale à 87°, de l'angle défini ci-dessus pour le canal 3. Les parois latérales de ce canal sont ainsi inclinées de 3° sur la direction médiane du flux d'eau admis dans la turbine. Il en résulte un bon écoulement de l'eau le long des parois du canal et la réduction progressive de la quantité d'eau admise par les injecteurs successifs, ce qui est finalement favorable au bon fonctionnement.

Une autre caractéristique supplémentaire réside dans la valeur, de préférence égale à 30° comme indiqué ci-dessus, de l'angle formé par les chanfreins 31, 32 (figure 1) avec les parois inférieure et supérieure du canal 3, du côté du rotor: on a constaté que ces chanfreins facilitent le glissement de l'eau et facilitent également l'équilibrage axial du rotor.

Une dernière caractéristique est constituée par la valeur préférentielle minimum du rapport entre la surface du jet de propulsion (c'est-à-dire de la section interne de l'extrémité de la tuyère 12, figure 1) et la surface totale des huit fenêtres d'admission de l'eau dans la chambre statorique 4. On a indiqué ci-dessus que chacune de ces fenêtres avait, dans le mode d'exécution décrit, 10 mm × 2 mm, ce qui donne une surface de 160 mm² pour l'ensemble. Il a été constaté que ladite section interne devait de préférence avoir une section minimale de 180% de cette valeur, soit au moins 288 mm². Dans l'exemple décrit, il s'agit d'un cercle de 20 mm de diamètre. Si cette condition n'est pas respectée, la contre-pression due à l'échappement du jet d'eau par la tuyère freine le rotor de la turbine.

On notera que, lorsque l'on ne désire pas utiliser un effet de propulsion dans l'eau de l'ensemble constitué par la turbine et par les outils qui lui sont associés, effet fourni par le jet qui s'échappe de la tuyère, le conduit coudé 11 et la tuyère 12 peuvent être supprimés, l'échappement de l'eau étant alors libre.

La turbine décrite peut être fabriquée à des coûts réduits en utilisant des matières plastiques moulées. Il va de soi que diverses modifications de forme et de dimensions pourront lui être apportées, sans toutefois s'écarter notablement des limites imposées par les conditions fixées ci-dessus, qui sont essentielles à son bon fonctionnement avec un rendement acceptable.

## Revendications

1. Turbine hydraulique comportant un distributeur se présentant sous la forme d'un canal sans aubages qui communique, avec les aubages mobiles d'un rotor à quatre aubes, au moyen d'injecteurs constitués par des fentes formées entre des portions de couronne circulaire du stator, en nombre double de celui des aubes, l'eau s'échappant axialement au centre de la chambre rotorique, caractérisée en ce que les aubes ont un profil en arc de cercle, que les portions de la couronne statorique qui définissent les injecteurs ont chacune une face terminale plane sensiblement inclinée à 45° sur le rayon correspondant de la portion de couronne considérée et, pour un premier injecteur, formant un angle sensiblement égal à 135° avec le plan tangent à la surface extérieure de l'aube correspondante, lorsque celle-ci occupe une position dans laquelle une aube voisine est sur le point de venir coopérer avec l'injecteur considéré.

2. Turbine selon la revendication 1, caractérisée en ce que, dans ladite position d'une aube, elle coopère avec un second injecteur dont la face terminale plane fait un angle sensiblement égal à 120° avec le plan tangent à la surface extérieure de ladite aube.

3. Turbine selon la revendication 2, caractérisée en ce que la différence d'inclinaison entre deux jets consécutifs agissant sur la même aube est constamment sensiblement égale à 15°.

4. Turbine selon la revendication 1, caractérisée en ce que le rapport entre le rayon extérieur desdits arcs de cercle et le rayon du rotor est sensiblement égal à 3/4.

5. Turbine selon l'une des revendications 1 à 4, caractérisée en ce que lesdits arcs de cercle ont leurs quatre centres situés sur un cercle ayant pour centre le centre du rotor et pour rayon 0,33 fois ledit rayon intérieur de la couronne statorique.

6. Turbine selon l'une des revendications 1 à 5, caractérisée en ce que, le rotor comportant deux disques de diamètre légèrement inférieur à celui de la chambre statorique centrale, entre lesquels sont fixées les quatre aubes, disposées de manière à former quatre chambres de travail de l'eau ouvertes chacune à une extrémité au voisinage d'un orifice axial d'échappement, dans ladite position d'une aube, la distance de ladite extrémité voisine de l'orifice d'échappement au diamètre du rotor perpendiculaire à celui qui passe par le centre dudit premier injecteur, est d'environ 12 mm pour un rayon intérieur de la couronne statorique égal à 59,5 mm.

7. Turbine selon l'une des revendications 1 à 6, caractérisée par un jeu, de l'ordre de 1% du diamètre du rotor, entre celui-ci et la chambre statorique qui le reçoit.

8. Turbine selon la revendication 6 ou 7, caractérisée par un jeu de l'ordre de 3% de la hauteur de la chambre statorique, entre celle-ci et les surfaces correspondantes desdits disques.

9. Turbine selon l'une des revendications 1 à 8, caractérisée en ce que le profil développé dudit canal statorique dans un plan perpendiculaire à l'axe du rotor à la forme générale d'un trapèze isocèle dont la grande base correspond à l'orifice d'entrée de l'eau et dont les côtés allongés font un angle sensiblement égal à 87° avec la grande base.

10. Turbine selon les revendications 1 à 9, caractérisée en ce que, dans sa partie qui communique avec la chambre statorique par les injecteurs, ledit canal a une section droite comportant deux chanfreins sensiblement inclinés à 30° sur le plan des bases de ladite chambre.

11. Turbine selon l'une des revendications 1 à 10, caractérisée par un conduit coudé, orientable dans toutes les directions et muni d'une tuyère raccordée à l'orifice axial d'échappement de l'eau.

12. Turbine selon la revendication 11, caractérisée en ce que la surface de la section droite interne de l'extrémité de la tuyère est au moins égale à 1,8 fois la surface totale des huit fenêtres d'admission de l'eau dans la chambre statorique définies par les injecteurs.

## Patentansprüche

1. Eine Wasserturbine mit einem Düsenleitapparat in Form eines schaufellosen Kanals, der mit beweglichen Schaufeln eines vierschaufeligen Rotors durch Injektoren verbunden ist, die von den Schlitzen zwischen den Ringpartien des Stators gebildet werden und deren Anzahl doppelt so groß wie die der Schaufeln ist, wobei das Wasser axial zur Mitte der Rotorkammer abströmt, dadurch gekennzeichnet, daß die Schaufeln ein kreisbogenförmiges Profil aufweisen; daß die Partien des Statorringes, welche die Injektoren bilden, je eine ebene, um etwa 45° gegen den Radius der entsprechenden Ringpartie geneigte Endfläche haben und, beim ersten Injektor, einen Winkel von etwa 135° mit der zu der äußeren Oberfläche der entsprechenden Schaufel tangierenden Ebene bilden, wenn diese Schaufel sich in einer Stellung befindet, in der eine benachbarte Schaufel sich anschickt, mit dem entsprechenden Injektor zusammenzuwirken.

2. Turbine nach Anspruch 1, dadurch gekennzeichnet, daß, wenn sich eine Schaufel in besagter Stellung befindet, sie mit einem zweiten Injektor zusammenarbeitet, dessen Endfläche einen Winkel von etwa 120° mit der zu der äußeren Oberfläche der besagten Schaufel tangierenden Ebene bildet.

3. Turbine nach Anspruch 2, dadurch gekennzeichnet, daß die Differenz zwischen den Neigungen zweier aufeinanderfolgender Wasserstrahlen, die auf die gleiche Schaufel einwirken, etwa 15° beträgt.

4. Turbine nach Anspruch 1, dadurch gekennzeichnet, daß das Verhältnis zwischen dem Außenradius besagter Kreisbogen und dem Rotorradius etwa 3/4 beträgt.

5. Turbine nach einem der Ansprüche 1 bis 4, dadurch gekennzeichnet, daß die 4 Zentren besagter Kreisbogen sich auf einem Kreis befinden, dessen Mittelpunkt der Mittelpunkt des Rotors ist und dessen Radius 0,33mal der besagte innere Radius des Statorringes ist.

6. Turbine nach einem der Ansprüche 1 bis 5, dadurch gekennzeichnet, daß der Rotor zwei Scheiben enthält, deren Durchmesser geringfügig unter dem der zentralen Statorkammer liegt und zwischen denen die vier Schaufeln so angebracht sind, daß sie vier Wasserverarbeitungskammern bilden, die jeweils an einem Ende in der Nähe einer axialen Abströmöffnung bei der genannten Schaufelstellung geöffnet sind. Der Abstand zwischen dem besagten, der Abströmöffnung benachbarten Ende und dem Durchmesser des Rotors im rechten Winkel zu dem durch den Mittelpunkt des besagten ersten Injektors verlaufenden beträgt etwa 12 mm bei einem Innenradius des Statorringes von 59,5 mm.

7. Turbine nach einem der Ansprüche 1 bis 6, dadurch gekennzeichnet, daß zwischen dem Durchmesser des Rotors und der Statorkammer, die ihn aufnimmt, ein Spielraum von 1% des Rotordurchmessers besteht.

8. Turbine nach Anspruch 6 oder 7, dadurch gekennzeichnet, daß zwischen der Statorkammer und den entsprechenden Oberflächen besagter Scheiben ein Spielraum von 3% der Höhe der Statorkammer besteht.

9. Turbine nach einem der Ansprüche 1 bis 8, dadurch gekennzeichnet, daß das in einer Ebene im rechten Winkel zur Rotorachse entwickelte Profil des besagten Statorkanals die allgemeine Form eines gleichschenkligen Trapezes hat, dessen große Basis der Wassereintrittsöffnung entspricht und dessen lange Seiten einen Winkel von etwa 87° mit der großen Basis bilden.

10. Turbine nach Ansprüchen 1 bis 9, dadurch gekennzeichnet, daß der besagte Kanal in seiner durch die Injektoren mit der Statorkammer verbundenen Partie einen Querschnitt mit zwei um etwa 30° gegen die Basisebenen besagter Kammer geneigten Schrägungen aufweist.

11. Turbine nach einem der Ansprüche 1 bis 10, gekennzeichnet durch eine gekrümmte Leitung, die in jeder Richtung beweglich ist und an die axiale Wasserabströmöffnung durch ein Rohr angeschlossen ist.

12. Turbine nach Anspruch 11, dadurch gekennzeichnet, daß die Oberfläche des inneren Querschnittes des Rohrendes mindestens 1,8mal so groß ist wie die Gesamtoberfläche der 8 Fenster, durch die das Wasser in die von den Injektoren gebildete Statorkammer eintritt.

## Claims

1. A hydraulic turbine, having a distributor in the form of a passage without blades which communicates with the movable blades of a rotor with four blades, by means of injectors constituted by gaps formed between portions of a circular ring of the stator, the number of which is double that of the blades and wherein the water escapes axially to the center of the rotor chamber, wherein the blades have a profile of an arc of a circle, the portions of the stator ring which define the injectors each have a plane terminal face inclined at substantially 45° to the corresponding radius of the respective portion of the ring, and, for a first injector, forming an angle of substantially 135° with the plane tangent to the external surface of the corresponding blade, when the said blade occupies a position in which an adjacent blade is at the point of cooperating with the respective injector.

2. A turbine, according to claim 1, wherein, in said position of the blade, it cooperates with a second injector the plane terminal face of which forms an angle of substantially 120° with the plane tangent to the external surface of said blade.

3. A turbine, according to claim 2, wherein the difference of inclination of two consecutive jets acting on the same blade is always substantially 15°.

4. A turbine, according to claim 1, wherein the ratio between the external radius of the said arcs of circle and the radius of the rotor is substantially 3/4.

5. A turbine, according to one of claims 1 to 4, wherein the said arcs of circle have their four centers situated on a circle having for its center the center of the rotor and for its radius 0.33 times the said internal radius of the stator ring.

6. A turbine according to one of claims 1 to 5 wherein the rotor comprises two discs of diameter slightly less than that of the central stator chamber and between which the four blades are fixed and disposed in such a manner as to form four water working chambers each open at one end in the region of an axial escape opening, and wherein, in the said position of a blade, the distance between the said extremity which is inproximity of the escape opening and the diameter of the rotor perpendicular to that which passes through the center of the first injector, is about 12 mm for an internal radius of 59.5 mm for the stator ring.

7. A turbine, according to one of claims 1—6, wherein there is a play, of the order of 1% of the diameter of the rotor, between the rotor and the stator chamber which receives it.

8. A turbine, according to claim 6 or 7 wherein there is a play of the order of 3% of the height of the stator chamber between the stator chamber and the corresponding surfaces of the said discs.

9. A turbine, according to one of claims 1—8, wherein the developed profile of the stator passage in a plane perpendicular to the axis of the rotor has generally the form of an isosceles trapezium the major base of which corresponds to the inlet opening for water and the elongated sides of which form an angle of substantially 87° with the major base.

10. A turbine, according to claims 1 to 9, wherein said passage, in its part which communicates with the stator chamber through the injectors, has a rectangular section comprising two chambers inclined at substantially 30° to the plane of the bases of the said chamber.

11. A turbine, according to one of claims 1 to 10, comprising a curved conduit movable in all directions and provided with a pipe connected to the axial escape opening for water.

12. A turbine, according to claim 11, wherein the surface of an internal cross-section of an end of the pipe is at least 1.8 times the total surface of the eight windows admitting water into the stator chamber defined by the injectors.

# Fig.1

# Fig. 2

Fig. 3

Fig. 4